# EUROPÄISCHE PATENTANMELDUNG

(11) **EP 0 587 235 A2**
(43) Veröffentlichungstag der Anmeldung: **16.03.1994**
(21) Anmeldenummer: 93202550.5
(22) Anmeldetag: 01.09.1993
(51) Int. Cl.: G11B 15/44, G11B 15/10

(54) **Magnetbandkassettengerät mit einem Laufwerk für Magnetbandkassetten (Koppelschieber)**

(30) Priorität: 09.09.1992 DE 4230127
(71) Anmelder: Philips Patentverwaltung GmbH, 22335 Hamburg (DE); Philips Electronics N.V., 5621 BA Eindhoven (NL)
(72) Erfinder: Kunze, Norbert, D-20097 Hamburg (DE); Müller, Dieter, D-20097 Hamburg (DE)
(74) Vertreter: von Laue, Hanns-Ulrich, Dipl.-Ing.

(57) **Zusammenfassung**

Die Erfindung bezieht sich auf ein Magnetbandkassettengerät mit einem Laufwerk für Magnetbandkassetten, das für Spiel- und Schnellspulbetrieb mit einer ersten und einer gegenläufigen zweiten Bandlaufrichtung ausgelegt ist, wozu außer einem ersten und einem zweiten, von einem Wickelgetriebe (09) wahlweise antreibbaren Wickelteller (12a, 12b) für das Magnetband eine erste und eine zweite in gegenläufigen Drehrichtungen antreibbare Tonwelle (3) vorgesehen sind, wobei der Schnellspulbetrieb mittels Schnellspultasten (51, 52) einleitbar ist und die Umschaltung zwischen den Bandlaufrichtungen mittels Umschaltmitteln (03) erfolgt, zu denen ein Schalthebel (29) für die Umschaltung des Wickelgetriebes (09) gehört, wobei zum Rückwärtsschnellspulen das Wickelgetriebe für die Schnellrücklaufzeit die Wickelteller in Gegenrichtung zur zuvor gehandhabten Richtung schaltet, wobei
- ein schwenkbarer Starthebel (37) der Umschaltmittel (03) im Spiel- oder Schnellspulbetrieb mittels eines ebenfalls schwenkbaren Reversehebels (35) drehgesichert positionierbar ist und zur Einleitung von Reversiervorgängen von dem Reversehebel (35) zum Drehen freigeben kann,
- der Starthebel (37) die Umschaltmittel (03) zum Reversieren für schnelles Rückspulen freigibt, damit diese den Schalthebel (29) von einer Spielrichtung in die andere umschalten,
- das Ausmaß der Schwenkbewegung des Starthebels (37) jedoch während des Einleitens der Umschaltvorgänge begrenzbar ist mittels eines Koppelschiebers (32), bis eine Arretierung der gedrückten Schnellspultasten (51, 52) gesichert ist,
- noch am Ende des Schnellrückwärtsspulens das Wickelgetriebe erneut um- und damit zurückgeschalten, wonach der Koppelschieber (32) die arretierte Schnellauftaste entrastet.

## Beschreibung

Die Erfindung bezieht sich auf ein Magnetbandkassettengerät mit einem Laufwerk für Magnetbandkassetten, das für Spiel- und Schnellspulbetrieb mit einer ersten und einer gegenläufigen zweiten Bandlaufrichtung ausgelegt ist, wozu außer einem ersten und einem zweiten, von einem Wickelgetriebe wahlweise antreibbaren Wickelteller für das Magnetband eine erste und eine zweite in gegenläufigen Drehrichtungen antreibbare Tonwelle vorgesehen sind, wobei der Schnellspulbetrieb mittels Schnellspultasten einleitbar ist und die Umschaltung zwischen den Bandklaufrichtungen mittels Umschaltmitteln erfolgt, zu denen ein Schalthebel für die Umschaltung des Wickelgetriebes gehört.

Aus der EP 428 219 A2 (PHD 89-200) ist ein Magnetbandkassettengerät mit einem Saufwerk für Zweirichtungsbetrieb und mit einem Umkehrgetriebe für logischen Schnellauf bekannt. Das Laufwerk hat einen Umschaltmechanismus mit einem Schalthebel, mit dem nach Maßgabe von Schnellauftasten das Wickelgetriebe auf schnellen Vorlauf und schnellen Rücklauf schaltbar ist. Mit Hilfe des Schalthebels wird die Laufrichtung der Wickelteller für die Magnetbandspulen umgestellt.

Die Schnellauffunktionen werden über die Schnellauftasten in Gang gesetzt. Während des Ablaufes der Schnellauffunktionen ist die jeweils gedrückte Schnellauftaste eingeschoben arretiert. Für das manuelle Umkehren der Laufwerksspielrichtung werden beide Schnellauftasten gemeinsam eingeschoben; sie dürfen jedoch in diesem Fall nicht arretiert bleiben.

Es ist Aufgabe der Erfindung, bei einem Laufwerk, das zum Ausführen eines schnellen Rücklaufes wegen des Fehlens eines Schnellaufgetriebes reversiert wird, Maßnahmen zu treffen, die verhindern, daß eine Taste für schnellen Rücklauf gleich beim Eindrücken oder unmittelbar danach durch den für den schnellen Rücklauf notwendigen Reversevorgang sofort wieder entrastet; die Entrastung soll erst erfolgen, wenn das Band bis zum Bandende zurückgespult ist oder das Beenden des Rückspulens von Hand vorgenommen wird.

Die gestellte Aufgabe ist erfindungsgemäß dadurch gelöst, daß zum Rückwärtsschnellspulen das Wickelgetriebe für die Schnellrücklaufzeit die Wickelteller in Gegenrichtung zur zuvor gehandhabten Richtung schaltet, wobei
- ein schwenkbarer Starthebel der Umschaltmittel im Spiel- oder Schnellspulbetrieb mittels eines ebenfalls schwenkbaren Reversehebels drehgesichert positionierbar ist und zur Einleitung von Reversiervorgängen von dem Reversehebel zum Drehen freigeben kann,
- der Starthebel die Umschaltmittel zum Reversieren für schnelles Rückspulen freigeben kann, damit diese den Schalthebel von einer Spielrichtung in die andere umschalten,
- das Ausmaß der Schwenkbewegung des Starthebels jedoch während des Einleitens der Umschaltvorgänge begrenzbar ist mittels eines Koppelschiebers, bis eine Arretierung der gedrückten Schnellspultasten gesichert ist,
- noch am Ende des Schnellrückwärtsspulens das Wickelgetriebe erneut um- und damit zurückschalten, wonach der Koppelschieber die arretierte Schnellauftaste entrastet.

Der Starthebel, der den Reversiervorgang einleiten will, muß durch die Beeinflussung seiner Bewegungsfähigkeit durch den Koppelschieber vor dem Einleiten eines Reversiervorganges warten, bis die gedrückte Taste arretiert ist. Damit steigt die Betriebssicherheit des Laufwerkes.

Im Zuge dieser Funktionsweise ist nach einer weiteren Ausgestaltung der Erfindung vorgesehen, daß der Koppelschieber den Starthebel während des Eindrückvorganges der REV-Schnellspultaste in seiner Bewegungsfreiheit zunächst so begrenzt, daß dieser den REV-Vorgang noch nicht einleiten kann, bis die REV-Schnellspultaste nach weiterem Eindrücken arretiert ist unter Zuhilfenahme einer Arretierklinke, und daß danach der Koppelschieber den Starthebel zum Drehen freigibt, damit dieser den REV-Vorgang einleiten kann. Der Koppelschieber stellt also eine selbstaktive Verbindung zwischen dem Starthebel und der Klinke dar, mittels der die Schnellspultasten arretierbar sind.

Nach einer weiteren Ausgestaltung der Erfindung ist vorgesehen, daß der Koppelschieber eine Kopplung darstellt zwischen einem Stellhebel und der Arretierklinke für die Schnellauftaste. Ist die Kopplung vorhanden, so führt ein Verschwenken des Stellhebels zu einer Verdrehung der Arretierklinke und damit zum Entrasten der eingedrückten Schnellauftaste. Wird die Kopplung aufgehoben, so kann der Stellhebel verschwenken, ohne daß die Schnellauftaste entrastet wird. Die Kopplung wird aufgehoben durch vollständiges Verschwenken des Starthebels, wodurch der Koppelschieber aus dem Wirkbereich des Stellhebels herausbewegt wird. Dies ist immer dann der Fall, wenn das Laufwerk einen Reversiervorgang durchführt. Dies bedeutet, daß bei dem Reversiervorgang selbst kein automatisches Entrasten der Schnellauftasten möglich ist.

Nach einer weiteren Ausgestaltung der Erfindung ist vorgesehen, daß der Koppelschieber und die Arretierklinke an ihrer Kontaktstelle über eine Feder zusammengehalten werden. Dadurch folgt der Koppelschieber der beim Eindrücken der Schnellauftaste wegschwenkenden Arretierklinke, wodurch der Starthebel an einer vollständigen Schwenkbewegung gehindert wird. Da erst bei einer vollständigen Schwenkbewegung des Starthebels ein Reversiervorgang starten kann, ist dieser dadurch so lange unterbunden, wie die Schnellauftaste noch nicht bis zur Rastposition vorgeschoben ist. Ist die Schnellauftaste bis in Rastposition vorgeschoben, so schwenkt die Arretierklinke zurück, und der Koppelschieber folgt dieser Bewegung, so daß die Behinderung der Starthebelbewegung aufgehoben wird. Jetzt startet der Reversevorgang, wodurch der Koppelschieber durch den wegschwenkenden Starthebel unter Aufhebung der Kopplung zwischen Koppelhebel und Arretierklinke entgegen der Kraft der Feder aus dem Wirkbereich des Stellhebels herausgezogen wird.

Nach einer weiteren Ausgestaltung der Erfindung ist vorgesehen, daß der vom Schalthebel verschwenkbare Stellhebel mit einem Entrastansatz versehen ist, der beim ersten teilweisen Verschwenken des Umschaltmechanismus nach Erreichen des Bandendes beim Schnellspulen gegen eine Koppelnase des Koppelschiebers stößt, diesen dadurch verschiebt und dieser dann seinerseits mit seinem Klinkenansatz gegen einen Entrastansatz der Arretierklinke stößt. Die Arretierklinke wird dadurch verschwenkt und die Schnellauftaste entrastet.

Nach einer weiteren Ausgestaltung der Erfindung ist vorgesehen, daß der Starthebel eine von Stopwänden begrenzte Führung aufweist, in die ein Verriegelungsstift des geradlinig geführten Koppelschiebers mit Spiel einlaufen kann, um dem Starthebel nur Schwenkbewegungen innerhalb der Führung zwischen den Stopwänden zu gestatten, während die eingedrückte Schnellauftaste noch nicht gerastet ist. Der geradlinig verschiebbare Koppelschieber fährt damit also zwischen die Stopwände des Starthebels und gestattet diesem während des Einschiebevorganges einer Schnellspultaste nur eine begrenzte Schwenkbewegung, bis die Klinke am Ende des Einschubweges die Schnellspultaste gerastet hat.

Nach einer weiteren Ausgestaltung der Erfindung ist vorgesehen, daß der Koppelschieber außer im Falle des Wegführens aus dem Wirkbereich der Klinke mit der schwenkbaren Klinke in Kontakt steht mit Hilfe einer Schenkelfeder, die einerseits die Klinke gegen den Klinkenansatz drückt und andererseits verschiebar auf den Koppelschieber einwirkt, um den Klinkenansatz des Koppelschiebers gegen die Klinke zu drücken. Der Koppelschieber und die Klinke stellen damit bis auf den Zeitraum des Auseinanderziehens beim vollständigen Verschwenken des Starthebels eine gemeinsam verschiebbzw. verschwenkbare Einheit dar.

Nach einer weiteren Ausgestaltung der Erfindung ist vorgesehen, daß die Klinke einen Verriegelungszapfen aufweist, der mit Schnellauftasten derart zusammenwirkt, daß Tastenverriegelungsnocken die Klinke beim Eindrücken der Schnellauftasten so verschwenken können, daß die Klinke den Koppelschieber aus dem Zusammenwirken mit dem Starthebel herauszieht und daß beim Einschieben nur einer Schnellauftaste diese mit ihrem Tastenverriegelungsnocken hinter dem Verriegelungszapfen zu ihrer Verriegelung einrasten kann.

Nach einer weiteren Ausgestaltung der Erfindung ist vorgesehen, daß am Koppelschieber eine Koppelnase vorgesehen ist, die mit einer Y-förmigen Steuerkontur des Starthebels zusammenarbeitet. Befindet sich die Koppelnase in dem im wesentlichen parallel zur Längsrichtung des Starthebels verlaufenden Teil der Steuerkontur, so verhindert er ein vollständiges Verschwenken des Starthebels, wenn dessen Verschwenken von dem Reversehebel eigentlich freigegeben ist. Dies ist der Fall, wenn die Schnellrücklauftaste eingeschoben ist, aber die Rastposition nicht erreicht hat. Befindet sich die Koppelnase im Kreuzungsbereich der drei Bahnen der Steuerkontur, so führt ein Verschwenken des Starthebels dazu, daß die Koppelnase und damit der Koppelschieber in Richtung auf den Drehpunkt des Starthebels gezogen wird. Dies ist bei der Ausführung eines Reversiervorganges der Fall. Die Kopplung zwischen Stellhebel und Arretierklinke über den Koppelschieber ist dabei aufgehoben, und der während des Reversierens umschwenkende Stellhebel bewegt sich an dem Entrastansatz des Koppelschiebers vorbei, ohne den Koppelschieber zu bewegen, so daß die Arretierklinke die Schnellauftaste gerastet hält. Nach Beendigung jedes Reversiervorganges befindet sich die Koppelnase wieder in dem Kreuzungsbereich.

Die Erfindung wird anhand der Zeichnungen näher erläutert.
Es zeigen:
Fig. 1 ein Schaubild eines Laufwerkes für Magnetbandkassetten in einem Magnetbandkassettengerät in der Vorwärtsspielrichtung (NOR),
Fig. 2 einen Schnitt durch das Wickelgetriebe des Laufwerkes,
Fig. 3 ein Schaubild des Laufwerkes nach Fig. 1 in der Rückwärtsspielrichtung (REV),
Fig. 4a bis 4d den Umschaltmechanismus in verschiedenen Funktionsstellungen zusammen mit den sie betätigenden Hebeln,
Fig. 4e ein Detail aus den Fig. 4a bis 4d, welches das Zusammenwirken eines Reversehebels mit einem Starthebel darstellt,
Fig. 5 das Wickelgetriebe in der Schaltstellung für schnellen Vorlauf im Vorwärtsspielbetrieb (SVL-NOR) und schnellen Vorlauf im Rückwärtsspielbetrieb (SVL-REV),
Fig. 6 das Wickelgetriebe in der Schaltstellung für schnellen Vorlauf in Rückwärtsspielbetrieb (SVL-REV) und für schnellen Rücklauf im Vorwärtsspielbetrieb (SVL-NOR),
Fig. 7 die Stellung des Mechanismus im Reverse-Play-Betrieb,
Fig. 8 das Zusammenwirken der Teile des Umschaltmechanismus während des manuellen Reversiervorganges.

### Antriebsprinzip

Der Wickelantrieb des für Vorwärts- und Rückwärtsbetrieb eingerichteten Laufwerkes erfolgt immer vom Tonwellenmotor über ein Antriebszwischenrad auf eine einzige zentral angeordnete Spielkupplung mit Kupplungsprimär- und -sekundärrad, welche sich ständig im Uhrzeigersinn dreht.

Ein Zwischengetriebe schaltet das Drehmoment des Kupplungssekundärrades je nach Wiedergaberichtung auf den entsprechenden Vorwärts- oder Rückwärts-Wickelteller. Der Tonwellenantrieb erfolgt vom Tonwellenmotor über eine Peese auf zwei entgegengesetzt drehende Schwungscheiben. Die Schwungscheiben tragen Verzahnungen, von denen die Bewegungen für die Reverseschaltvorgänge abgeleitet werden. Dies bedeutet, daß der Wickel- und der Tonwellenantrieb weitgehend entkoppelt sind.

Der Antrieb der Wickel erfolgt auch im Schnellauf über das Zwischengetriebe, wobei die Spielkupplung durch ein Kurzschlußrad überbrückt wird, um das zur Verfügung stehende Spulmoment zu erhöhen. Es existieren weder eine Schnellspulkupplung noch ein spezielles Schnellspulgetriebe.

Zur Verkürzung der Schnellspulzeit trägt das Kurzschlußrad zwei unterschiedliche Verzahnungen, die bei gleichem Achsabstand mit verschieden großen Verzahnungen von Primär- unf Sekundärkupplungsrad kämmen, wodurch im Schnellaufbetrieb das Sekundärkupplungsrad schneller dreht als der Primärkupplungsrad. Dadurch, daß kein extra Schnellaufgetriebe vorgesehen ist, muß grundsätzlich zum schnellen Rücklauf reversiert werden und nach dessen Beendigung durch erneutes Reversieren die alte Spielrichtung wieder eingestellt werden. Rücklauf heißt also generell Vorlauf in der anderen Richtung.

Um trotz fehlender Schnellaufkupplung ein Durchrutschen der Peese am Bandende zu verhindern, ist das Getriebe so ausgelegt, daß bei Erreichen einer Grenzkraft das austreibend ausgelegte Getriebe von dem jeweiligen Wickel wegschwenkt, wobei diese Schwenkbewegung zur Beendigung des Spulbetriebes ausgenutzt wird.

### Wickelgetriebe 09

### Antrieb in Vorwärtsspielrichtung (NOR-Spielbetrieb

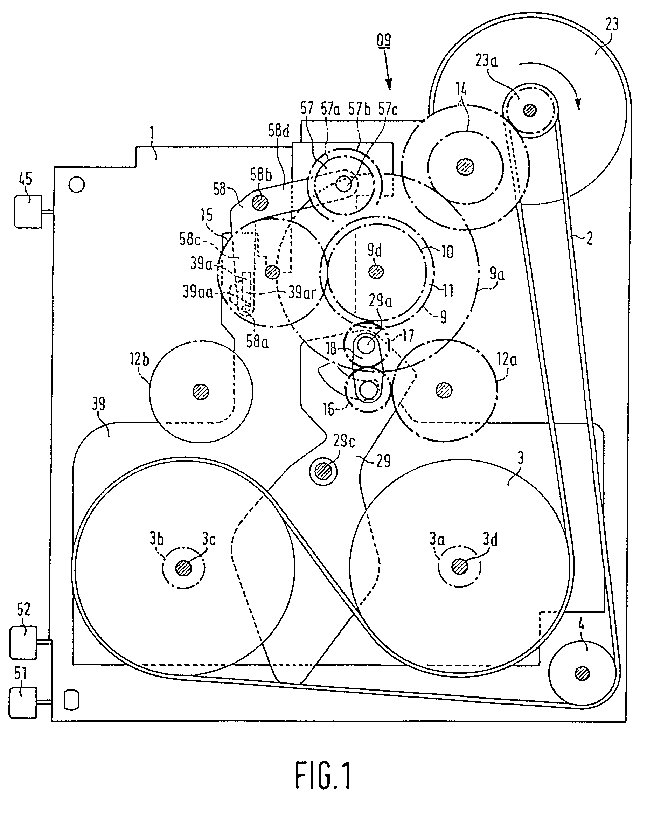

Das Schaubild nach Fig. 1 zeigt auf einem Chassis 1 den Antrieb der bewegten Teile des Laufwerkes. Ein Motor 23, der nur in einer Richtung umläuft, treibt über eine Peese 2 in entgegengesetzten Richtung Schwungscheiben 3 für die Tonwellen 3c für Rückwärtsspielbetrieb (REV) und 3d für Vorwärtsspielbetrieb (NOR) an. Die Tonwellen 3c, 3d sind mit Verzahnungen 3a und 3b versehen. Die Peese 2 ist über eine Umlenkrolle 4 geführt.

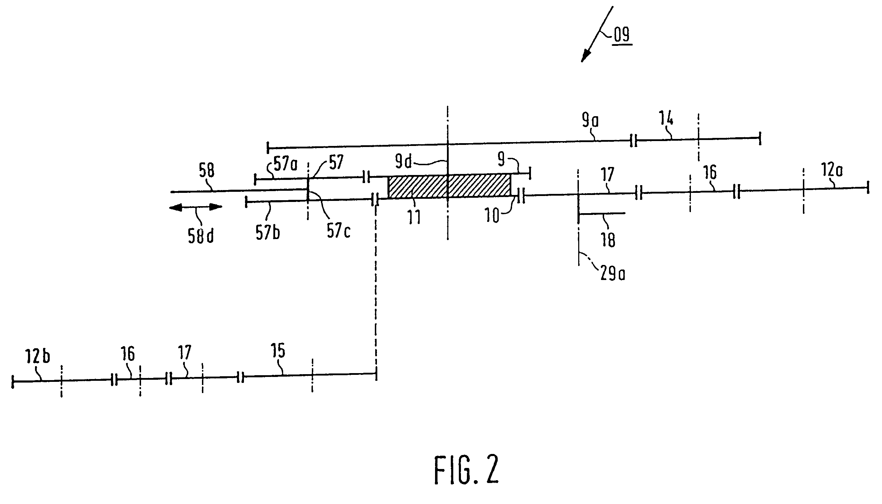

Dem Antrieb des Vorwärtswickeltellers 12a für den Vorwärtsspielbetrieb (NOR) und des Rückwärtswickeltellers 12b für Rückwärtsspielbetrieb (REV) dient ein Wickelgetriebe 09, welches ebenfalls von dem Motor 23 angetrieben wird und welches in Fig. 2 im Schnitt dargestellt ist. Der Motor 23 treibt hierzu mit seiner Welle 23a über ein Antriebszwischenrad 14 die Spielkupplung mit einem Antriebszahnkranz 9a eines Primärkupplungsrades 9 an, welches sich - solange sich die Motorwelle 23a dreht - ständig um eine Welle 9d dreht. Das Primärkupplungsrad 9 treibt ein konzentrisch zu ihm angeordnetes Sekundärkupplungsrad 10 über eine drehmomentübertragende Schlupfkupplung 11 an.

Mit dem Sekundärkupplungsrad 10 ist ein Zwischenrad 17 in Eingriff, das um eine Achse 29a eines Schalthebels 29 drehbar ist. Der Schalthebel 29, der in einer Endstellung für Vorwärtsbetrieb (NOR) oder in einer Endstellung für Rückwärtsbetrieb (REV) stehen kann und in diesen Endlagen festgelegt ist, steht dabei im Uhrzeigersinn belastet in der NOR-Stellung. Das Zahnrad 17 kämmt mit einem Zahnrad 16, das bei der Darstellung nach Fig. 1 und 2 mit dem NOR-Wicketeller 12a im Eingriff ist.

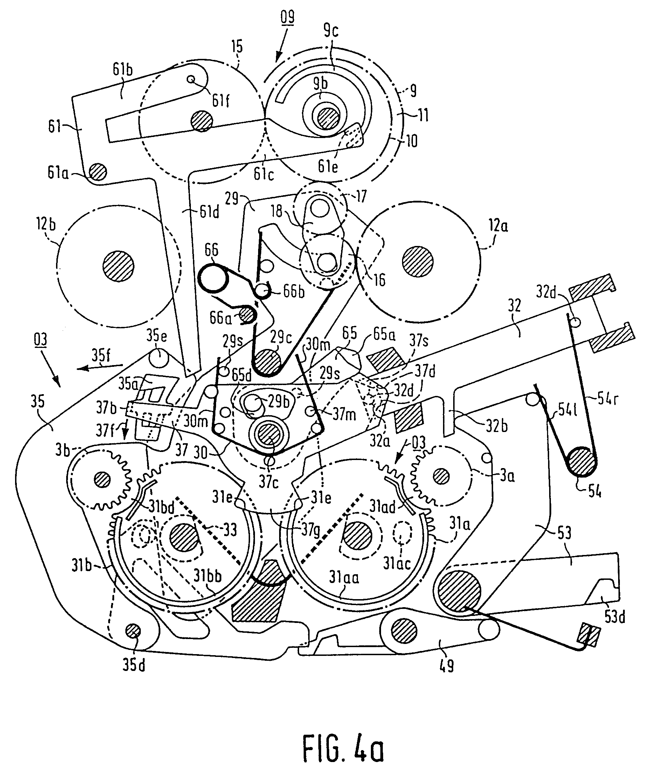

Die Verzahnungskräfte wirken auf die einzelnen Zahnräder so, daß die Paarung NOR-Wickelteller 12a/Schwenkrad 16 einziehend und die Paarung Kupplungssekundärrad 10/Zwischenrad 17 ausdrückend sind. Der Umschalthebel 29 ist in der NOR-Stellung nach Fig. 1 durch eine Schalthebelfeder 66 (Fig. 4a) im Uhrzeigersinn belastet. Die Belastung ist dabei so groß, daß der Umschalthebel 29 entgegen den Verzahnungskräften nach rechts, also im Uhrzeigersinn, in Richtung auf den NOR-Wickelteller 12a gedrückt wird.

Zu dem Wickelgetriebe 09 gehört ein Kurzschlußdoppelzahnrad 57, dessen Welle 57c auf einem doppelarmigen, um eine Achse 58b schwenkbaren Kurzschlußradhebel 58 angeordnet ist. Wie ein Doppelpfeil 58d in Fig. 2 zeigt, kann das Kurzschlußrad 57 mit dem Primärkupplungsrad 9 und dem Sekundärkupplungsrad 10 derart in Eingriff oder außer Eingriff gebracht werden, daß beim Eingriff die Kupplung 11 kurzgeschlossen und außer Eingriff die Kupplung wirksam ist. Mit Hilfe dieses Kurzschlußrades 57 können die NOR- und REV-Wickelteller 12a, 12b zum Schnellspulen auf Schnellauf geschaltet werden. Um die höhere Schnellspulgeschwindigkeit zu erhalten, ist das Übersetzungsverhältnis so gewählt, daß die Zähnezahl des Primärkupplungszahnrades 9 größer ist als die Zähnezahl des Sekundärkupplungszahnrades 10 und daß die Zähnezahl des mit dem Zahnrad 9 kämmenden Kurzschlußrades 57a kleiner ist als die Zähnezahl des mit dem Sekundärkupplungsrad 10 kämmenden Kurzschlußrades 57b.

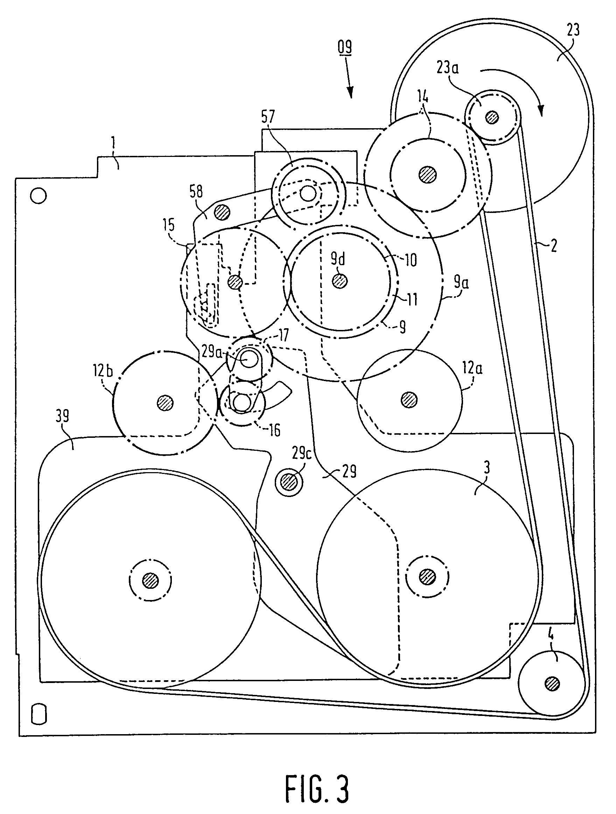

Weiterhin gehört zu dem Wickelgetriebe 09 ein Reverserad 15, das ständig mit dem Sekundärkupplungsrad 10 kämmt. Dieses Reverserad kann beim Reversebetrieb, wie er in Fig. 3 dargestellt ist, über das Zwischenrad 17 und das Schwenkrad 16 den REV-Wickelteller 12b antreiben.

Während an einem Arm des doppelarmigen Kurzschlußhebels 58 das Kurzschlußrad 57 angeordnet ist, trägt der andere Arm 58c des Kurzschlußhebels 58 einen Stellstift 58a, der in einer Leitkontur 39a des Kopfträgers 39 geführt ist. Diese Leitkontur besteht aus einer als Rundlaufführungsbahn ausgebildeten Leitkontur 39a mit einem in der Zeichnung nach links ausgebogenen, schräg ansteigenden linken Bahnteil 39aa und einem geradlinigen rechten Rücklaufbahnteil 39ar, die an den Enden miteinander verbunden sind. In der Leitkontur 39a kann der Stellstift 58a umlaufen. Wird der Kopfträger 39 von der Spielstellung in die Schnellaufstellung gedrückt, dann durchläuft der Stellstift 58a den linken Bahnteil 39aa, wobei der Stellstift 58a nach links gezogen wird und das Kurzschlußrad 57 gegen das Primär- und Sekundärkupplungsrad 9 und 10 schwenkt. Bleibt der Kopfträger in dieser Stellung stehen, dann schließt das Kurzschlußrad 57 das Primär- und Sekundärkupplungsrad 9, 10 kurz. Da die Übersetzung vom Primärkupplungsrad 9 zum Sekundärkupplungsrad 10 über das Kurzschlußrad so gewählt ist, daß das Sekundärkupplungsrad 10 mit größerer Geschwindigkeit umlaufen kann, läßt sich über diese Getriebeanordnung ein Schnellauf der Wickelteller 12a,12b erreichen. Dieser Schnellauf kann ein Schnellvorlauf (SVL) oder ein Schnellrücklauf (SRL) sein und wird später weiter beschrieben.

### Antrieb in Rückwärtsspielrichtung (REV-Spielbetrieb)

Während in Fig. 1 der Spielbetrieb in Vorwärtsrichtung dargestellt ist, zeigt Fig. 3 den Spielbetrieb in Rückwärts-(REV)-Richtung. Dabei ist in Fig. 3 zu erkennen, daß der um die Achse 29c schwenkbare Schalthebel 29 entgegen dem Uhrzeigersinn verschwenkt ist. Der zum Verschwenken eingesetzte Umschaltmechanismus 03 wird später erläutert. In dieser Stellung kämmt das Zwischenrad 17 mit dem Reverserad 15.

Damit erfolgt der Antrieb des REV-Wickeltellers 12b in der REV-Richtung von dem Motor 23 über dessen Welle 23a, das Antriebszwischenrad 14 und den Antriebskranz 9a des Primärkupplungsrades 9, welches ständig in gleichbleibender Richtung im Uhrzeigersinn dreht. Das Primärkupplungsrad 9 treibt über die Reibkupplung 11 das Sekundärkupplungsrad 10 an. Das Sekundärkupplungsrad 10 treibt seinerseits das Reverserad 15 an, welches dann über das Zwischenrad 17 und das Schwenkrad 16 den REV-Wickelteller 12b im Uhrzeigersinn dreht.

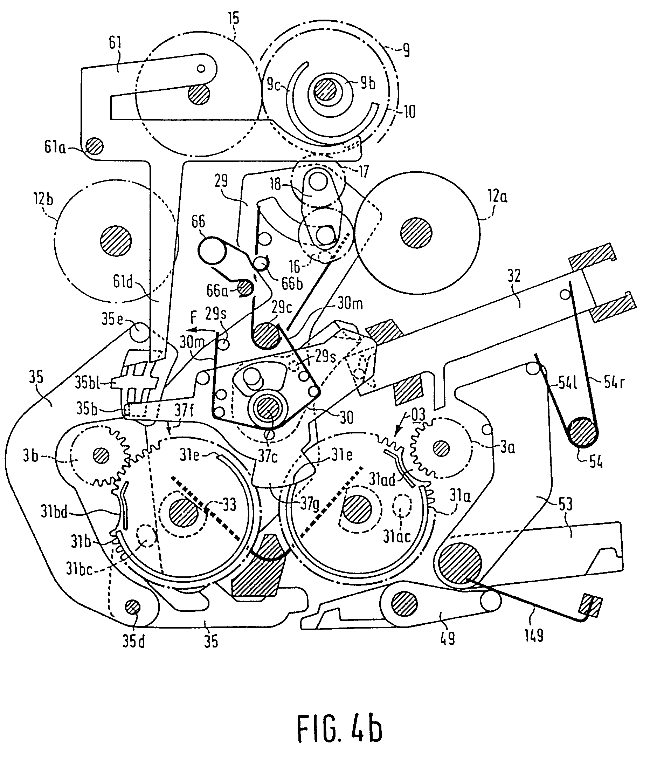

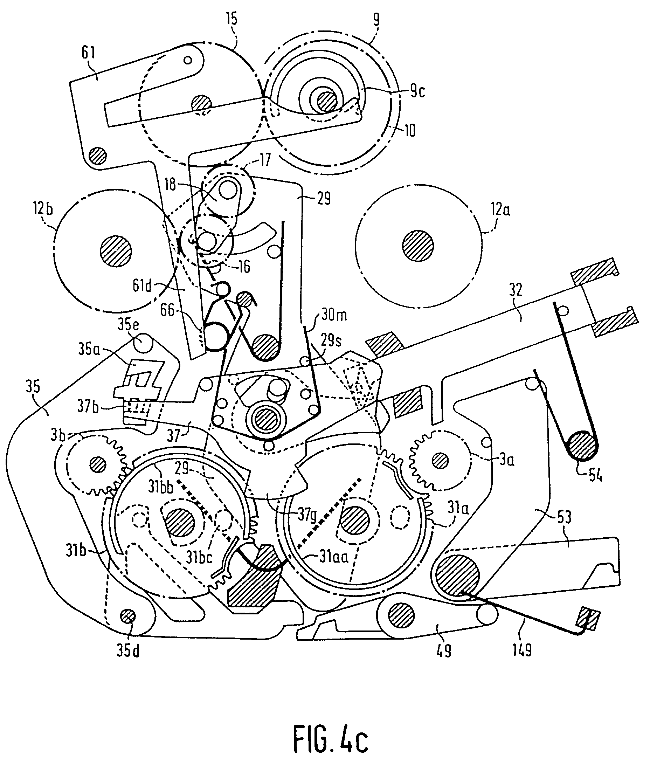

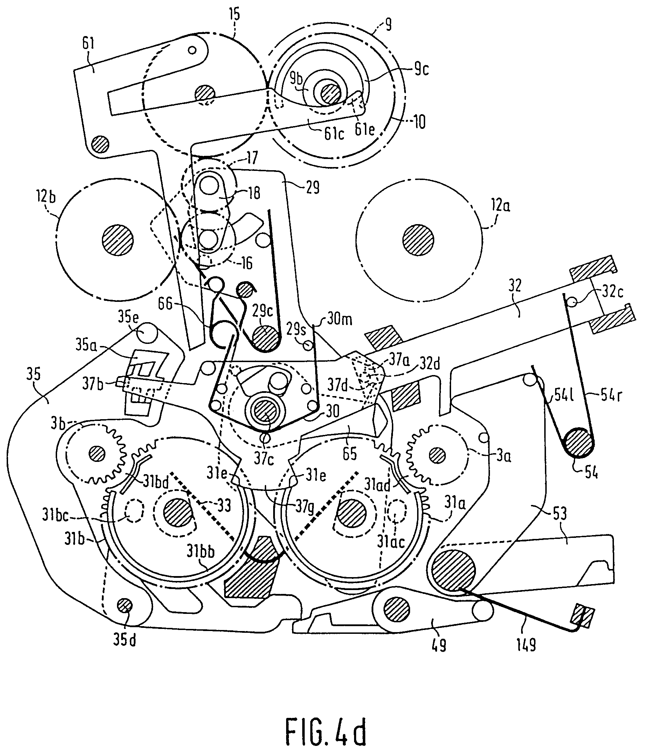

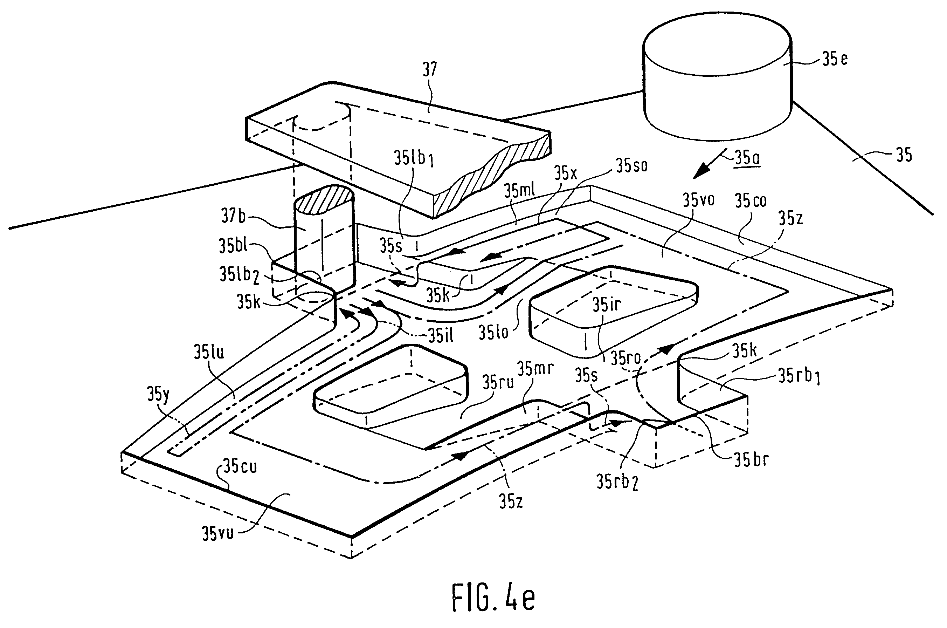

Die Verzahnungskräfte auf die einzelnen Zahnräder wirken, in diesem Fall des REV-Betriebes so, daß die Paarung REV-Wickelteller 12b/Schwenkrad 16 einziehend und die Paarung REV-Rad 15/Zwischenrad 17 ausdrückend ist. Der Schalthebel 29 ist durch die Schalthebelfeder 66 (Fig. 4) entgegen dem Uhrzeigersinn belastet. Die belastende Kraft ist dabei so hoch, daß der Schalthebel 29 entgegen den Verzahnungskräften nach links gedrückt wird.

In dem REV-Spielbeterieb nach Fig. 3 ist das Kurzschlußrad 57 von dem Primärkupplungsrad 9 und dem Sekundärkupplungsrad 10 abgehoben, so daß beide Kupplungsräder nur über die Kupplung 11, also mit Schlupfmöglichkeit miteinander in Verbindung stehen.

### Automatisches Reversieren (Fig. 4a bis 4e)

Zum Übergang von der einen Spielrichtung nach Fig. 1 in die andere Spielrichtung nach Fig. 3 muß der Antrieb reversiert werden. Dieser Reversiervorgang erfolgt automatisch während des Spielbetriebes oder des Bandschnellaufes jeweils am Bandende, wenn das Band stehen bleibt. Das Reversieren ist aber auch durch Tastendruck durchführbar. Dies wird später unter manuellem Reversieren beschrieben. Im folgenden wird der Reversiervorgang am Bandende bei Bandstillstand im Vorwärtsbetrieb (NOR) beschrieben; er ist in den Fig. 4a bis 4e dargestellt.

### Detektionsmechanismus für das Reversieren im Spiel- und Schnellspulbetrieb

Der Detektionsmechanismus wird anhand der Fig. 4a erläutert, die den Schalthebel 29 in der NOR-Spielrichtung zeigt. Es handelt sich also in Fig. 4a um die Detektierung eines Bandstillstandes im Spielbetrieb. Das Kupplungssekundärrad 10 treibt dabei über das Zwischenrad 17 und das Schwenkrad 16 den NOR-Wickelteller 12a an. Es ist ein Steuerhebel 61 vorgesehen, der um eine Drehachse 61a verschwenkbar ist.

Der Steuerhebel 61 weist einen Tastarm 61b, einen Schaltarm 61c und einen Reversearm 61d auf. Der Tastarm 61b trägt einen Taster 61f, der ständig über eine Stirnfläche eines Reverserades 15 schleift und somit ein dem Uhrzeigersinn entgegengesetzt gerichtetes Drehmoment auf den Steuerhebel 61 ausübt. Der Schaltarm 61c trägt einen Nocken 61e, der ständig gegen eine Stellkontur 9b am Primärkupplungsrad 9 gedrückt wird, solange das Reverserad 15 umläuft. Infolge einer exzentrischen Lage der Stellkontur 9b macht der Steuerhebel 61 dabei ständig eine Pumpbewegung.

Läuft nun das nicht dargestellte Magnetband in der nicht dargestellten Kassette bis zum Bandende und bleibt stehen, dann bleibt auch der NOR-Wickelteller 12a stehen und ebenso das mit ihm gekuppelte Sekundärkupplungsrad 10. Das Primärkupplungsrad 9 läuft weiter. Durch den Stillstand des Sekundärkupplungsrades 10 wird auch das Reverserad 15 angehalten. Das weiterlaufende Primärkupplungsrad 9 dreht nun, da das Reverserad 15 nicht mehr bestrebt ist, den Taster 61f entgegen dem Uhrzeigersinn zu belasten, den Steuerhebel 61 und dessen Schaltarm 61c im Uhrzeigersinn. Die Entlastung kommt zustande, weil infolge des Stillstandes des Reverserades 15 kein Rückstellmoment auf den Steuerhebel 61 ausgeübt wird. Der Schaltarm 61c des Steuerhebels 61 verläßt nun die Stellkontur 9b des Primärkupplungsrades 9 und gerät in den Bereich einer Schaltkontur 9c. Der Schaltarm 61c überläuft die Schaltkontur 9c und verschwenkt den Steuerhebel 61 im Uhrzeigersinn. Dadurch stößt der Reversearm 61d des Steuerhebels 61 gegen einen Nocken 35e eines Reversehebels 35 (Fig. 4a) und verschwenkt diesen um dessen Drehachse 35d entgegen dem Uhrzeigersinn in Richtung eines Pfeiles 35f. Damit ist der Reversiervorgang eingeleitet. Bevor der weitere Ablauf des Reversierens beschrieben wird, wird erst der Aufbau eines Umschaltmechanismus 03 beschrieben.

### Umschaltmechanismus 03 zum Reversieren des Laufwerkes

Fig. 4a bis 4e zeigen den Umschaltmechanismus mit zwei Schalträdern 31a, 31b, einer Stellfeder 33, dem um die Drehachse 35d schwenkbaren Reversehebel 35, einem um eine Drehachse 37c schwenkbaren Starthebel 37, einem ebenfalls um die Drehachse 37c schwenkbaren Stellhebel 65 sowie dem Schalthebel 29 in der Stellung für NOR-Spielbetrieb im Übergang zum REV-Spielbetrieb. Der um die Achse 29c schwenkbare Schalthebel 29 hat einen Bolzen 29b, der durch ein Langloch 65d des Stellhebels 65 hindurchgreift. Der Stellhebel 65 ist damit vom Schalthebel 29 verstellbar. Der Starthebel 37 wird durch eine von der Schalthebelfeder 30 herrührende Kraft F (Richtungspfeil 37f) zu einem Verschwenken entgegen dem Uhrzeigersinn belastet. Ein Verschwenken des Starthebels 37 wird aber verhindert, da eine an ihm vorgesehene Steuernase 37b von einer Fangtasche 35bL (Fig. 4e) der Steuerkontur 35a am Reversehebel 35 arretiert ist.

Der Reversehebel 35 ist von einer nicht dargestellten Übertotpunktfeder belastet. Diese Übertotpunktfeder wirkt wie folgt: Bei dem Starten des Reversierens von dem NOR-Betrieb in den REV-Betrieb wird der Übertotpunkt nicht überwunden. Der Reversehebel 35 federt also im Uhrzeigersinn zurück. Das gilt sowohl beim Übergang vom NOR-Betrieb in den REV-Betrieb als auch beim Übergang vom REV-Betrieb in den NOR-Betrieb. Die Ausnahme, bei der diese Übertotpunktfeder ihren Übertotpunkt überschreitet, bildet der schnelle Rücklauf (SRL), zu dem das Wickelgetriebe reversiert wird. Beim Drücken der Taste für schnellen Rücklauf (SRL) wird der Übertotpunkt überwunden, und der Reversehebel 35 ist nun entgegen dem Uhrzeigersinn belastet. Der Starthebel 37 hat, vorgegeben durch die Kraftrichtung 37f der auf ihn wirkenden Schalthebelfeder 30, das Bestreben, sich aus seiner Mittelstellung entgegen dem Uhrzeigersinn zu verdrehen.

Zum besseren Verständnis werden der Aufbau und das Zusammenwirken von Reversehebel 35 und Starthebel 37 in Fig. 4e vorgezogen erläutert. Der Starthebel 37 weist eine Steuernase 37b auf, die mit einer Steuerkontur 35a des Reversehebels 35 zusammenwirkt, indem sie diese Steuerkontur 35a abfährt. Die Steuerkontur 35a weist Fangtaschen 35bL und 35bR auf, die in entgegengesetzten Richtungen angeordnet und aufeinander zu geöffnet sind. Die Öffnungen sind mit 35iL und 35iR bezeichnet. Die Fangtasche 35bL für NOR-Betrieb hat eine Fangkante 35Lb₁ und dieser gegenüber eine Fangkante 35Lb₂. Von der Öffnung 35iL der Fangtasche 35bL zweigen in der Zeichnung nach oben eine obere linke Führungsbahn 35LO und eine untere linke Führungsbahn 35LU ab. Von der Öffnung 35iR zweigen in der Zeichnung eine obere rechte Führungsbahn 35RO und eine untere rechte Führungsbahn 35RU ab. Die oberen Führungsbahnen 35LO und 35RO sind über eine obere Verbindungsbahn 35VO verbunden. Die unteren Führungsbahnen 35LU und 35RU sind mittels einer unteren Verbindungsbahn 35VU verbunden. Die Verbindungsbahnen verbinden damit die linke Hälfte der Steuerkontur 35a mit der rechten Hälfte der Steuerkontur 35a. Die Verbindungsbahnen 35VO und 35VU haben Fangkanten 35cO und 35cU, die sie nach außen begrenzen. Parallel zur oberen Führungsbahn 35LO verläuft eine erste schräge Auflauffläche 35mL, die vom niedrigen Niveau des Bodens 35sO ansteigt zur Oberkante der oberen linken Fangkante 35Lb₁. Parallel zur unteren Führungsbahn 35RU verläuft eine zweite schräge Auflauffläche 35mR, die an der Oberkante der unteren rechten Fangkante 35Rb₂ ausläuft.

Die Steuernase 37b kann entgegen dem Uhrzeigersinn längs einer strichpunktpunktierten Linie (-..-..-; 35y) durch die untere linke Führungsbahn 35LU bis zur unteren Verbindungsbahn 35VU laufen. Ebenso kann die Steuernase 37b aber auch auf der linken Seite der Steuerkontur 35a im Uhrzeigersinn in einer gestrichelt dargestellten Kurve (---; 35x) aus der linken Fangtasche 35bL über die linke obere Führungsbahn 35LO und die obere linke schräge Fläche 35mL in die Fangtasche 35bL zurücklaufen.

In der NOR-Spielstellung liegt die Steuernase 37b, wie Fig. 4e zeigt, an der Fangkante 35Lb₂ an. Um das Laufwerk in dem Betriebsmodus für schnellen Rücklauf im Vorwärtsbetrieb (SRL-NOR) zu schalten, verläßt die Steuernase 37b zum Zwecke der Einleitung des Reversiervorganges die linke Fangtasche 35bL und die Fangkante 35Lb₂, weil entweder der Reversearm 61d oder die Taste für schnellen Rücklauf (51SRL) über den Nocken 35e den Reversehebel 35 entgegen dem Uhrzeigersinn weggedrückt hat. Da der Starthebel 37 entgegen dem Uhrzeigersinn federbelastet ist, fährt die Steuernase 37b in der Führungsbahn 35LU zur unteren Verbindungsbahn 35VU und legt sich an die untere Fangkante 35cU an. In dieser Stellung hat sich der Starthebel 37 so weit entgegen dem Uhrzeigersinn verdreht, daß eine Anschlagwand 37g eine Stoprippe 31bb derart freigegeben hat, daß die Stellfeder 33 das Schaltrad 31b entgegen dem Uhrzeigersinn so weit verdrehen kann, daß die Schwungscheibenverzahnung und die Verzahnung des Schaltrades in Eingriff kommen (siehe Fig. 4b). Die Folgen dieses In-Eingriff-Kommens werden später noch beschrieben. Im Rahmen der Zurückführung der Hebel 35, 37 in ihre Ausgangsstellungen, wobei der Reversehebel 37 im Uhrzeigersinn verschwenkt, gleitet die Steuernase 37b im Rahmen der Kurve 35y nach oben und fällt hinter die linke obere Fangkante 35Lb₁. Der Starthebel 37 ist damit wieder in der linken Fangtasche 35bL gefangen.

Damit sichergestellt ist, daß die Steuernase 37b nicht in die Führungsbahn 35LO überläuft, ist die linke obere Fangkante 35Lb₁ so weit bis zu einer Ecke 35k verlängert, daß die zurücklaufende Steuernase 37b auf die linke obere Fangkante 35Lb₁ stoßen muß.

Die Bahn 35y wird also sicher durchfahren, um das Umschaltgetriebe vom NOR-Spielbetrieb in den REV-Betrieb umzuschalten.

Im REV-Spielbetrieb ist der Starthebel 37 von dem Umschalthebel 29 in dem Uhrzeigersinn belastet. Die Steuernase 37b liegt also in der Fangtasche 35bL an der oberen linken Fangkante 35Lb₂ an. Wird nun zum Umschalten vom REV-Betrieb in den NOR-Betrieb der Reversehebel 35 entgegen dem Uhrzeigersinn verschwenkt, um den Reversiervorgang einzuleiten, verläßt die Steuernase 37b die Fangtasche 35bL und fährt auf der Kurve 35x, die gestrichelt dargestellt ist, über die Bahn 35Lo nach oben und legt sich an die Fangkante 35co an. Im Zuge des Reversiervorganges ändert sich die Richtung der Kraft 37f der Starthebelfeder 30 auf den Starthebel 37, so daß die Steuernase 37b über die schräge Ebene 35ml in die Mittelstellung zurückschwenkt und an die Kante 35Lb₂ anschlägt. Der Starthebel 37 schwenkt im Zuge des Reversierens von REV nach NOR im Uhrzeigersinn zurück, sodaß die Steuernase 37b des Starthebels in die Fangtasche 35bl zurückfällt.

Wird von der NOR-Spielstellung aus der schnelle Rücklauf (SRL) gewünscht, dann wird die schnelle Rücklauftaste 51 gedrückt, die die Wirkrichtung der auf den Reversehebel 35 gerichteten Kraft durch Überwindung des Übertotpunktes umkehrt in eine Richtung entgegen dem Uhrzeigersinn. Das hat zur Folge, daß der Reversehebel 35 entgegen dem Uhrzeigersinn verschwenkt. Die Steuernase 37b durchfährt nun die strichpunktiert (-.-.-.) dargestellte Bahn 35z entgegen dem Uhrzeigersinn und bleibt zunächst an der Fangkante 35Cu unten rechts liegen. Hier wird jetzt der erste Reversevorgang beim schnellen Rücklauf eingeleitet. Dadurch kehrt sich die Kraft der Feder 30 auf den Starthebel um, und dessen Steuernase 37b durchfährt auf der Bahn 35z die untere rechte Führungsbahn 35mR entgegen dem Uhrzeigersinn, fällt gegen die obere rechte Fangkante 35Rb₁ und anschließend in die Fangtasche 35bR. Das Laufwerk befindet sich dann im schnellen Rücklauf.

Soll der schnelle Rücklauf beendet werden, dann fährt die SRL-Tastenstange 51s aufgrund einer in Ausfahrrichtung wirkenden Federkraft aus. Dabei kehrt die zwischen der SRL-Taste 51 und dem Revershebel 35 wirkende wirkende Übertotpunktfeder ihre Kraftwirkung um, und der Reversehebel 35 ist nun im Uhrzeigersinn federbelastet. Er schwenkt entsprechend und die Steuernase 37b fährt aus der Fangtasche 35bR heraus und durchfährt auf der Bahn 35z die obere rechte Führungsbahn 35Ro weiter entgegen dem Uhrzeigersinn bis zur oberen Fangkante 35Co. Hier wird der zweite Reversevorgang eingeleitet. Durch den Reversevorgang kehrt sich die Kraft der Feder 30 auf den Starthebel 37 wieder um und belastet ihn entgegen dem Uhrzeigersinn. Die Steuernase 37b durchfährt nun auf der Bahn 35z die obere linke Führungsbahn 35so weiter entgegen dem Uhrzeigersinn und fällt gegen die Fangkante 35Lb₂; schließlich gleitet die Steuernase dann zurück in die linke Fangtasche 35bL. Damit ist der schnelle Rücklauf (SRL) abgeschlossen. Das Laufwerk befindet sich durch das insgesamt zweimalige Reversieren wieder in der zuvor gewählten Spielrichtung.

Wird von der REV-Spielstellung ausgehend der schnelle Rücklauf gewünscht, so durchläuft die Steuernase 37b des Starthebels 37 die Bahn 35z der Steuerkontur 35a sinngemäß entgegen den Richtungen wie oben beschrieben.

Eingeleitet wird jeder Reversiervorgang, wie beschrieben, durch ein Wegziehen des Reversehebels 35, wodurch die Steuernase 37b aus der jeweiligen Fangtasche 35bL/35bR herausfährt, so daß der Starthebel 37 verschwenken kann und die Verzahnungen der Schalträder 31a oder 31b mit den Schwungscheibenverzahnungen 3a oder 3b in Eingriff kommen.

Fig. 4a zeigt den zum Umschalten eingesetzten Umschaltmechanismus 03 mit den Schalträdern 31a, 31b, dem Starthebel 37, dem Reversehebel 35, einem Reversetaster 49 sowie den Capstanverzahnungen 3a und 3b in NOR-Wiedergabe-Stellung. Die U-förmige Starthebelfeder 30 umschlingt das Drehlager 37c des Starthebels 37. Der Schalthebel 29 hat Stifte 29s, die in Abhängigkeit von der Schalthebelstellung an jeweils einem Schenkel 30m der Starthebelfeder 30 anliegen können. Der entsprechend andere Schenkel 30m stützt sich an dem gegenüberliegenden Stift 37m des Starthebels 37 ab. Dadurch wird der Starthebel je nach momentaner Wiedergaberichtung in oder entgegen dem Uhrzeigersinn belastet. Ein Verschwenken des Starthebels 37 wird verhindert, indem seine Steuernase 37b in der Fangtasche 35bL der Steuerkontur 35a am Reversehebel 35 arretiert ist. Die beiden Schalträder 31a/b haben jeweils ein zahnloses Segment 31ad/bd. Diese zahnlosen Segmente 31ad, 31bd befinden sich in der Darstellung nach Fig. 4a im Bereich der Schwungscheibenverzahnungen 3a/b. Die Schwungscheiben können demnach frei drehen. Die Schalträder sind durch die Stellfeder 33 so belastet, daß auf das linke Schaltrad 31b ein Drehmoment entgegen dem Uhrzeigersinn und auf das rechte Schaltrad 31a ein Drehmoment im Uhrzeigersinn wirkt. Die Drehbewegung wird jedoch dadurch verhindert, daß die Enden 31e der an den Schalträdern 31a/b vorgesehenen Stoprippen 31aa/31bb an einer Anschlagkante 37g des Starthebels 37 anliegen.

Die Stoprippen 31aa/31bb erstrecken sich als Teilbögen längs der Zahnbögen der Schalträder 31a/b. Die Enden 31e der Stoprippen 31aa/31bb, die mit der Anschlagkante 37g zusammenwirken, sind dabei derart angeordnet, daß sich die zahnlosen Segmente 31ad/31bd der Schalträder 31a, 31b beim Anliegen dieser Enden 31e an der Anschlagkante 37g vor den Schwungscheibenverzahnungen 3a, 3b befinden. Damit ist der Ruhezustand des Umschaltmechanismus 03 während des Spielmodus gesichert.

Fig. 4b zeigt den Start des Reversevorganges. Der Reversehebel 35 wird, da der Reversearm 61d im Uhrzeigersinn schwenkt und gegen den Nocken 35e des Reversehebels 35 stößt, entgegen dem Uhrzeigersinn verdreht. Dadurch verläßt die Steuernase 37b des Starthebels 37 die Fangtasche 35bL des Reversehebels 35. Dies hat zur Folge, daß der Starthebel 37 entgegen dem Uhrzeigersinn unter Wirkung der Kraft 37f so weit verschwenkt, daß seine Anschlagwand 37g die Stoprippe 31bb des Schaltrades 31b verläßt, wodurch dieses unter Wirkung der Kraft der Stellfeder 33 entgegen dem Uhrzeigersinn verdreht und mit der Schwungscheibenverzahnung 3b in Eingriff kommt. Das Schaltrad 31a ist weiter im Uhrzeigersinn belastet und liegt an der Anschlagwand 37g an.

Fig. 4c zeigt den nun einsetzenden Umschaltvorgang des Wickelgetriebes. Die Schwungscheibenverzahnung 3b dreht das Schaltrad 31b entgegen dem Uhrzeigersinn, wodurch dessen Stellstift 31bc gegen den Schalthebel 29 stößt und diesen entgegen dem Uhrzeigersinn umlegt. Dadurch wird auch das Schwenkgetriebe, bestehend aus dem Schwenkhebel 18, Schwenkrad 16 und dem Zwischenrad 17 von der NOR-Wiedergabestellung in die REV-Wiedergabestellung umgelegt.

Während der Umschaltbewegung des Wickelgetriebes stößt der Schalthebel 29 mit seinem rechten Stift 29s gegen den rechten Schenkel 30m der Starthebelfeder 30 und belastet den Starthebel 37 in Richtung auf seine Mittelstellung, um seine Steuernase 37b in die Fangtasche 35bL des Reversehebels 35, welcher durch weiter unten beschriebene Vorgänge wieder in seine Ursprungslage zurückfedernd belastet ist, zurückzuführen. Die Schwenkbewegung des Starthebels 37 ist aber behindert, da dessen Anschlagwand 37g gegen die Stoprippe 31bb stößt. Diese Blockierung wird erst freigegeben, nachdem der Stellstift 31bc den Schalthebel 29 in seine Endstellung gedreht hat. In dieser blockierten Stellung ist das Schaltrad 31a weiter an einer Drehbewegung gehindert, da die Stoprippe 31aa an der Anschlagwand 37g anliegt. Somit wird verhindert, daß während eines laufenden Umschaltvorganges das unbeteiligte Schaltrad 31a durch eine Fehlbedienung starten kann, da der Schalthebel 29 zwischen beiden Stellstiften 31bc/ac eingeklemmt werden kann. Nach dem Auflösen der Blockierung des Starthebels 37 schwenkt diese entsprechend der Kraft der Starthebelfeder 30 weiter im Uhrzeigersinn bis die Steuernase 37b in die linke Fangtasche 35bl eingefallen ist.

In Fig. 4d ist die vollzogene Umschaltung dargestellt.

Der Reversevorgang in die andere Richtung läuft entsprechend ab. Dabei dreht der Starthebel zur Einleitung des Vorganges allerdings im Uhrzeigersinn, und das Schaltrad 31a wird in die Schwungscheibenverzahnung 3a gedreht.

### Schnellauf

Antriebsmäßig unterscheidet sich der schnelle Vorlauf im Vorwärtsbetrieb (SVL-NOR) vom normalen Vorlauf im Vorwärtsbetrieb (NOR) ebenso wie der schnelle Vorlauf im Rückwärtsbetrieb (SVL-REV) vom normalen Rückwärtslauf (REV) dadurch, daß das Primärkupplungsrad 9 und das Sekundärkupplungsrad 10 der Spielkupplung über die beiden Verzahnungen 57a und 57b des Kurzschlußrades 57 miteinander verbunden sind. Dies geschieht dadurch , daß bei der Bewegung des Kopfträgers 39 (Fig. 1) von der Spielstellung in die Schnellspulstellung der Stift 58a des Kurzschlußradhebels 58 an der Schräge 39aa der Leitkontur 39a am Kopfträger 39 abgleitet. Da die Schräge 39aa einen nach links geschwungenen Bogen aufweist, dreht der Stellstift 58a den Kurzschlußradhebel 58 im Uhrzeigersinn um die Achse 58b, wodurch das Kurzschlußrad 57 mit der Spielkupplung in Eingriff kommt, d. h. das Primärkupplungsrad 9 wird mit dem Sekundärkupplungsrad 10 kurzgeschlossen. Durch das Kurzschließen der Kupplung steht am Wickel des NOR-Wickelrades 12a ein deutlich höheres Drehmoment zur Verfügung als beim normalen Wiedergabebetrieb. Dies bedeutet, daß die den Schalthebel 29 drehende Schalthebelfeder 66 kräftiger ausgelegt werden kann als dies für den Wiedergabebetrieb, bei dem die Verzahnungskräfte von der Spielkupplung begrenzt werden, notwendig wäre. Die Kraft, bei der die Verzahnung getrennt wird, kann deutlich oberhalb der Kraft im Wiedergabebetrieb liegen. Nach oben wird die zulässige Kraft durch das Moment am Primärkupplungsrad 9 begrenzt. Durch die große Spanne, die die Kraft zuläßt, ist gewährleistet, daß während des Spielbetriebes und des Schnellaufbetriebes die Verzahnung durch die Federkraft in Eingriff gehalten wird, jedoch am Bandende im Schnellaufbetrieb, wo die austreibenden Kräfte schlagartig ansteigen, getrennt wird. Dieses Kräftespiel gilt für beide Wiedergaberichtungen.

### Schneller Vorlauf

Beim schnellen Vorlauf im Vorwärtsspielbetrieb (SVL-NOR) ist es nur erforderlich, die Andruckrollen von den Tonwellen wegzufahren und die Antriebsgeschwindigkeit des Wickelrades 12a zu erhöhen bei sonst gleichbleibender Getriebestellung. Dies geschieht durch das Anlegen des Kurzschlußrades.

### Schneller Rücklauf

Bei dem schnellen Rücklauf (SRL) aus dem Vorwärtsspielbetrieb (NOR) wird das Wickelgetriebe 09 auf Rücklauf umgeschaltet. Üblicherweise geschieht dies mit Hilfe eines besonderen Umschaltgetriebes. Ein solch besonderes Umschaltgetriebe erfordert aber zusätzliches Bauvolumen und zusätzliche Teile. Ein derartiges zusätzliches Umschaltgetriebe ist hier eingespart. Diese Einsparung wird möglich, indem das Laufwerk zum Zwecke des schnellen Rücklaufes so reversiert wird, als würde die Spielrichtung geändert werden.

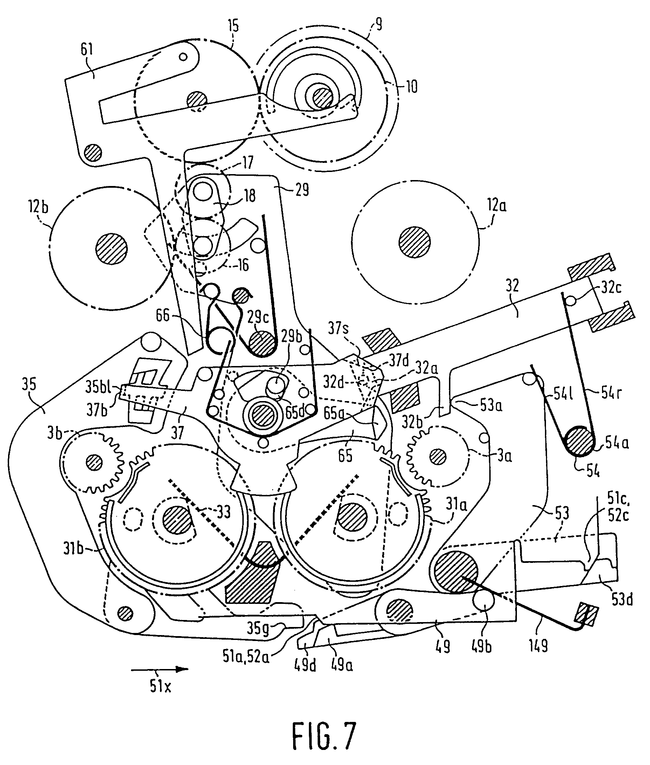

Mit dem Drücken einer Taste 51 für schnellen Rücklauf wird der Reversehebel 35 entgegen dem Uhrzeigersinn verschwenkt, wodurch der Starthebel 37 entriegelt wird. Gleichzeitig verdreht die SRL-Taste 51 mit einer Verriegelungsnase 51c (Fig. 7) eine Klinke 53 im Uhrzeigersinn, wodurch ein geradlinig verschiebbarer Koppelschieber 32 unter Wirkung der Kraft einer Schenkelfeder 54 nach rechts gleiten kann. (Es besteht nun eine kraftschlüssige Verbindung zwischen Klinke 53 und Koppelschieber 32, weil die Schenkelfeder 54 diese gegeneinander verspannt). Dadurch gerät dessen Verriegelungsstift 32d zwischen die Stoppwände 37d des Starthebels 37, so daß der Starthebel 37 nur um einen kleinen Bereich schwenken kann, bei dem der Reversevorgang noch nicht starten kann. (Der Starthebel 37 kann somit keines der Transporträder 31a, 31b zum Drehen freigeben.) Im weiteren Zuge der Einschubbewegung der SRL-Taste 51 gibt die Verriegelungsnase 51c der SRL-Taste die Klinke 53 wieder frei, wodurch diese durch Federkraft im Uhrzeigersinn zurückverschwenkt. Während sich die SRL-Taste 51 hinter der Nase 53d der Klinke 53 verriegelt und nicht zurückfahren kann, wird der Koppelschieber 32 von der Klinke 53 über den Klinkenansatz 32b nach links geschoben. Dadurch löst sich die Sperrung der Starthebel-Schwenkbewegung, wodurch der Starthebel 37 mit seinen schrägen Wänden 37s den Koppelschieber 32 über dessen Verriegelungsstift 32d weiter nach links zieht. Dies hat zur Folge, daß eine an ihm vorgesehene Koppelnase 32a soweit nach links gerät, daß bei dem gleich folgenden Reversiervorgang ein Entrastansatz 65a des Stellhebels 65 den Koppelschieber 32 nicht nach rechts schiebt. Die Klinke 53 wird jetzt also nicht verdreht, und die soeben gedrückte SRL-Taste bleibt eingeschoben verriegelt.

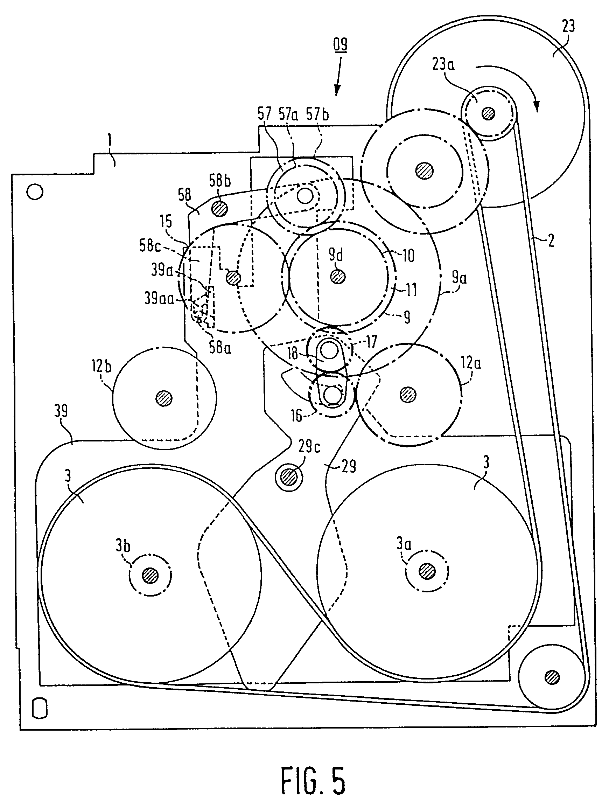

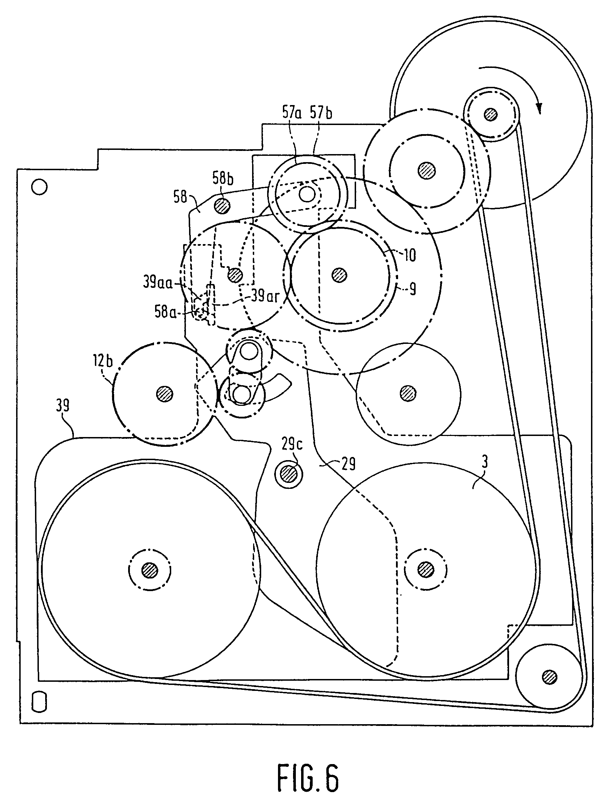

Bei dem oben inniziierten Reversevorgang über den Starthebel 37 wird das Laufwerk aus der Vorwärtsspielrichtung nach Fig. 1 und 5 in die Rückwärtsspielrichtung nach Fig. 2 und 6 umgeschaltet. Bei diesem Umlegen ist entsprechend der Darstellung nach Fig. 2 gleichzeitig das Zwischenrad 17 mit dem Reverserad 15 in Kontakt gekommen, und der Schwenkhebel 18 hat das Schwenkrad 16 an den linken Wickelteller 17b angelegt. Gleichzeitig ist der Kopfträger 39 von der Spielstellung in die Schnellspulstellung gefahren, wobei der Stellstift 58a das Kurzschlußrad 57 über den Kurzschlußradhebel 58 an die Primär- und Sekundärkupplungsräder 9, 10 angelegt hat. Der Wickelteller 12b wird damit mit einem höheren Drehmoment mit höherer Geschwindigkeit angetrieben, und das Magnetband wird mit höherer Geschwindigkeit zurückgespult.

Der schnelle Rücklauf kann auf zwei Arten beendet werden:
A) durch Eindrücken einer SVL-Taste 52 (der jeweils nicht gedrückten anderen Schnellauftaste)
B) automatisch durch Spulen bis zum Bandende.

Grundsätzlich gilt, daß beim Beenden des schnellen Rücklaufes die Taste 51 für schnellen Rücklauf ausfährt, dabei wird zum 2.Mal reversiert, sodaß die vor dem Rückspulen gültige Wiedergaberichtung wieder eingestellt wird. Der Kopfträger 39 fährt sofort wieder in die Spielstellung vor, womit der Spielbetrieb in Vorwärts-(NOR)- oder Rückwärts-(REV)-Richtung weitergehen kann. Die Fig. 5 und 6 zeigen, da der schnelle Rücklauf immer über ein Reversieren vorgenommen wird, jeweils zwei Betriebspositionen im Schnellauf. Fig. 5 zeigt den Schnellvorlauf in Vorwärtsspielrichtung (SVL-NOR), der getriebemäßig dem schnellen Rücklauf im Reversespielbetrieb (SRL-REV) entspricht. Das Kommando für den schnellen Vorlauf wird dabei durch die Schnell-Vorlauftaste 52 und das Kommando für den schnellen Rücklauf durch die Schnell-Rücklauftaste 51 gegeben.

Fig. 6 zeigt die Getriebestellung für den schnellen Vorlauf im Reversebetrieb (SVL-REV) und die Getriebestellung für den schnellen Rücklauf im Vorwärtsspielbetrieb (SRL-NOR). Die Bedienung erfolgt entweder über die schnelle Vorlauftaste 52 mit der Tastenstange 52s oder die schnelle Rücklauftaste 51 mit der Tastenstange 51s.

### Manuelles Reversieren

Zum manuellen Reversieren werden beide Schnellauftasten 51 und 52 gleichzeitig eingedrückt bis zu einem fühlbaren Anschlag, der der Abhebepunkt des Kopfträgers ist. Der Antriebsmotor wird ausgeschaltet. Beim anschließenden Loslassen beider Tasten wird zuerst der Motor wieder eingeschaltet, und das Reversieren beginnt. Der Vorgang wird anhand der Fig. 7 erläutert.

Fig. 7 zeigt das Wickelgetriebe 09 ohne Motor, den Steuerhebel 61, den Schalthebel 29, den Reversehebel 35 mit dem Starthebel 37, die Schwungradverzahnungen 3a und 3b, die Schalträder 31a, 31b mit der Stellfeder 33 sowie einen Reversetaster 49 in der Reverse-Wiedergabestellung. Die Schnellauftasten 52 und 51 sind nur im Bereich ihrer mit dem Reversetaster 49 und der Klinke 53 zusammenwirkenden Stellkonturen 51a/52a und Tastenstangen-Verriegelungsnasen 51c/52c dargestellt.

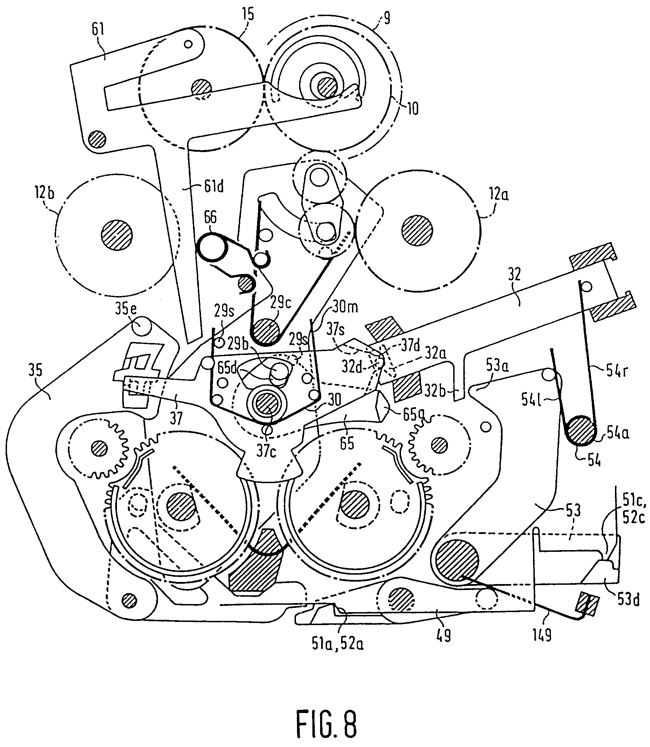

Durch das gleichzeitige Eindrücken beider Schnellauftasten gleitet ein Taststift 49a des Reversetasters 49 unter der Wirkung der Kraft einer Feder 149, die auf einen Stift 49b drückt, auf den Stellkonturen 51a, 52a ab und verschwenkt dabei im Uhrzeigersinn. Ein Reverseansatz 49d am Reversetaster 49 stößt gegen einen Tastansatz 35g des Reversehebels 35, wodurch dieser entgegen dem Uhrzeigersinn verdreht wird (Fig. 8). Dadurch wird der Starthebel 37 entriegelt und seine Steuernase 37b gleitet in die Führungsbahn 35LO, nachdem sie aus der Fangtasche 35bL herausgefahren ist; der Starthebel 37 verschwenkt aber noch nicht ganz, da durch das Einschieben der Schnellauftasten 51, 52 in Richtung des Pfeiles 51x gleichzeitig die Klinke 53 - angestoßen am Verriegelungszapfen 53d mittels Tastenverriegelungsnocken 51c/52c der Schnellauftasten 51/52 - im Uhrzeigersinn verschwenkt wird. Die Klinke 53 wird durch einen Schenkel 54L der Schenkelfeder 54, deren Wickelteil 54a im Chassis 1 gehalten ist entgegen dem Uhrzeigersinn belastet. Ein zweiter Schenkel 54r der Feder 54 stützt sich am Federlagerstift 32c des Koppelschiebers 32 ab und schiebt diesen mit dem Klinkenansatz 32b gegen einen Koppelansatz 53a der Klinke 53. Durch das Verschwenken der Klinke 53 gleitet der Koppelschieber 32, der Nase 53d folgend, nach rechts, wodurch sein Verriegelungsstift 32d zwischen die eine Führung bildenden Stopwände 37d des Starthebels 37 gerät und diesen damit am vollständigen Verschwenken hindert (Fig. 8), so daß der Reversevorgang noch nicht starten kann. Der Schwenkwinkel reicht jedoch aus, um die Steuernase 37b, nachdem sie die Fangtasche 35BL verlassen hat, etwas in die Führungsbahn 35LO einlaufen zu lassen. Beim Loslassen der beiden SL-Tasten 51, 52 wird der Reverseansatz 49d des Reversetasters 49 den Tastansatz 35g des Reversehebels 35 verlassen und wird die Klinke 53 ebenfalls freigegeben, wodurch der Koppelschieber 32, getrieben über die Kraft von Feder 54 nach links schiebt und die Verriegelung des Starthebels aufhebt. Durch die leichte Verschwenkung des Starthebels 37 beim zuvorigen Eindrücken der SL-Tasten 51, 52 kann die Steuernase 37b des Starthebels nicht in die Fangtasche 35bL zurückfallen; der Starthebel 37 verschwenkt nun also ganz, wobei die Steuernase 37b gegen die obere Kante 35co der Führungskontur 35a stößt. Der Motor wird nun eingeschaltet. Von da ab laufen die zusammen mit dem automatischen Reversieren beschriebenen Vorgänge ab, die mit dem Freigeben des Schaltrades 31b beginnen, bei dem die Zahnung des Schaltrades 31b mit der Schwungscheibenverzahnung 3b in Eingriff kommt und schließlich der Schalthebel von der REV-Stellung in die NOR-Stellung umgelegt wird.

### Reversieren bei Bandende im Schnellauf

Um trotz fehlender Schnellaufkupplung ein Durchrutschen der Peese am Bandende zu verhindern, ist das Getriebe so ausgelegt, daß bei Erreichen einer Grenzkraft der Feder 66 das austreibend ausgelegte Getriebe von dem jeweiligen Wickelteller 12a, 12b wegschwenkt, wobei diese Schwenkbewegung zur Beendigung des Spulbetriebes ausgenutzt wird. Der wegschwenkende Schalthebel 29 nimmt mit seinem Bolzen 29b den Stellhebel 65 an dessen Langloch 65d mit (Schalthebel 29 und Stellhebel 65 drehen dabei in entgegengesetzter Richtung). Der Entrastansatz 65a des Stellhebels 65 stößt dabei gegen die Koppelnase 32a des Koppelschiebers 32. Dieser wird nach rechts verschoben und stößt dabei mit seinem Klinkenansatz 32b gegen die Koppelnase 53a der Klinke 53, wodurch die jeweils eingedrückte Schnellauftaste 51 oder 52 entrastet wird und ausfährt. Der durch das Drücken einer der Schnellauftasten in die Schnellauf-Stellung gefahrene Kopfträger 39 fährt nun vor in die Spielstellung. Das Kurzschlußrad 57 wird aus dem Eingriff mit dem Primärkupplungsrad 9 und dem Sekundärkupplungsrad 10 herausgeschwenkt. Durch die frei werdende Kupplung fällt die austreibend wirkende Verzahnungskraft, die durch die zuvor kurzgeschlossene Kupplung hoch war und zum Auseinandertreiben der Verzahnung geführt hat, zurück auf den niedrigeren im Spielbetrieb. Die rückstellende Kraft der Feder 66 auf den Schalthebel 29 ist jetzt größer als die austreibenden Verzahnungskräfte, so daß der Schalthebel 29 zurückschwenkt in die Wiedergabestellung. Das Laufwerk befindet sich somit im Wiedergabemodus. Abhängig davon, ob zuvor der schnelle Vorlauf oder der schnelle Rücklauf gewählt war, folgt jetzt ein Autoreversevorgang, oder das Laufwerk bleibt im Wiedergabemodus.

Durch die Funktion des Koppelschiebers 32 - Ausnutzung der Schwenkbewegung des Schalthebels 29 zum Entrasten der Schnellauftasten am Bandende, aber Entkopplung dieser Funktion, wenn zuvor ein Reversevorgang durch Verschwenken des Starthebels 37 gestartet wurde - wird erreicht, daß beim Drücken der SRL-Taste 51 und dem unmittelbar darauf folgendem Reversevorgang die soeben gedrückte Taste nicht gleich wieder entrastet wird. Nur wenn der Starthebel 37 nicht betätigt wurde, überträgt sich die Schwenkbewegung des Schalthebels 29 über den Koppelschieber 32 auf die Klinke 53 und entrastet die Schnellauftasten. Durch diesen Aufbau ist ein grundlegendes Problem bei Mechanismen gelöst, welche zur Ausführung des Schnellen Rücklaufes kein extra Schnellaufgetriebe verwenden, sondern dazu den ohnehin vorhandenen Reversemechanismus mitbenutzen.

### Funktionsabläufe beim Schnellen Rücklauf vom Drücken der Schnellrücklauftaste bis zu ihrem Ausfahren am Ende des Schnellrücklaufvorganges

Die Funktionsweise des Koppelschiebers wird noch einmal verdeutlicht durch die Beschreibung der Bewegungsabläufe beim schnellen Rückspulen, das sich zusammensetzt aus einem ersten Hinreversieren in die Gegenlaufrichtung, dem Rückspulen und einem darauffolgenden zweiten Zurückreversieren in die Laufrichtung, aus der heraus das Rückspulen begann, wobei die gedrückte Schnellrücklauftaste 51 nur am Bendende automatisch oder gewollt durch Eindrücken der jeweils anderen SL-Taste entrastet werden darf.

Das Laufwerk befindet sich wie bei der Darstellung nach Fig. 4a im Play(NOR)-Betrieb. Aus dem Playbetrieb heraus soll nun ein schneller Rücklauf bis zum Bandende erfolgen. Hierzu wird die Taste 51 eingeschoben. Noch während des Einschiebens schwenkt die Taste 51 die Klinke 53 im Uhrzeigersinn. Der Koppelschieber folgt dieser Bewegung nach rechts. Der Verriegelungsstift 32d fährt zwischen die Stopwände 37d des Starthebels. Eine Übertotpunktfeder zwischen dem Reversehebel 35 und der Taste 51, die in der Zeichnung nicht dargestellt ist, ändert ihre Kraftrichtung beim Einschieben der Taste so, daß der Reversehebel 35 nach links schwenkt. Die Steuernase 37b verläßt die Tasche 37bL. Der Starthebel 37 verschwenkt entgegen dem Uhrzeigersinn, bis der Verriegelungsstift 32d an der unteren Stopwand 37d anliegt. Die Schalträder 31a und 31b bleiben arretiert.

Im weiteren Einschiebeverlauf der Taste 51 schwenkt die Klinke 53 gegen den Uhrzeigersinn zurück und verrastet mit der Nase 53d den Verriegelungsnocken 51c. Der Laufwerk befindet sich nun kurzzeitig im schnellen Vorlauf SVL.

Gleichzeitig mit dem Verrasten der SRL-Taste 51 durch das Verschwenken der Klinke 53 entgegen dem Uhrzeigersinn wird auch der Koppelschieber wieder nach links gezogen, und zwar bis vor schräge Wände 37s des Starthebels 37. Damit geht der schwenkbehindernde Kontakt zwischen dem Starthebel 37 und dem Koppelschieber 32 verloren. Der Starthebel 37 verschwenkt vollständig. Die Blockierung des Schaltrades 31b wird aufgehoben, und der Reversevorgang startet.

Durch das komplette Verschwenken des Starthebels 37 wird der Koppelschieber 32 von den schrägen Wänden 37s weiter nach links gezogen. Der Stellhebel 65 kann nun mit seinem Entrastansatz 65a den Koppelschieber 32 nicht mehr berühren; die Teile 65a und 32a laufen aneinander vorbei (Fig. 4b). Beim zu diesem Zeitpunkt ablaufenden Hinreversieren kann der Stellhebel 65 den Koppelschieber 32 also nicht nach rechts verschieben, womit der Koppelschieber nicht in der Lage ist, über die Klinke 53 die Taste 51 zu entrasten. Es läuft nun der Rückspielvorgang im schnellen Rücklauf bei verrasteter Taste 51. Der Schalthebel 29 steht dabei in REV-Spielstellung, d. h. er ist im Bereich des Schaltrades 31a nach rechts verschwenkt.

Das Band wird von dem einen Wickel abgewickelt. Der Reversehebel 35 ist nach rechts geschwenkt; die Steuernase 37b hängt in der rechten Tasche 35br. Der Koppelschieber 32 ist wieder zur Anlage an der Klinke 53 gekommen. Ist das Band vom Wickel abgewickelt, dann blockiert der entsprechende Wickelkern. Das austreibend ausgelegte Getriebe verschwenkt den Schalthebel 29 ein wenig im Uhrzeigersinn. Der Schalthebel 29 nimmt beim Verschwenken den Stellhebel 65 mit. Der Entrastansatz 65a stößt gegen den Stift 32a des Koppelschiebers 32 (Fig. 4c). Die Klinke 53 dreht sich nun im Uhrzeigersinn, und die Taste 51 wird entrastet und fährt aus. Die nicht dargestellte Übertotpunktfeder zwischen dem Reversehebel 35 und der Taste 51 ändert wieder ihre Kraftrichtung. Der Starthebel kann nun ganz verschwenken, und es erfolgt ein erneuter Reversevorgang, nunmehr das Zurückreversieren. Am Ende dieses Vorganges befindet sich das Laufwerk wieder im Vorwärts-Playbetrieb. Die Taste 51 ist ausgefahren.

### Lösen der Arretierung der Schnellauftaste 51 beim Beenden des Schnellen Rückspulens durch Drücken der Schnellvorlauftaste 52SVL

Der schnelle Rücklauf muß auch nach Wunsch bei jeder Bandstellung möglich sein. Der schnelle Rücklauf vor dem Bandende wird durch Drücken der Schnellvorlauftaste 52 beendet. Die einfahrende Taste 52 stößt mit ihrem Nocken 51c/52c gegen den Verriegelungszapfen 53d. Dabei verdreht die Klinke im Uhrzeigersinn, und die Verrastung der SL-Taste wird aufgehoben, wodurch diese ausfährt. Da sich die Kraftrichtung auf den Reversehebel 35 durch das Umlegen der Übertotpunktfeder wieder umkehrt und der Koppelschieber 32 vom Entrastansatz 65a in den formschlüssigen Kontakt mit der Klinke 53 gebracht ist (Fig. 4d), kann der Starthebel 37 ganz verschwenken. Es erfolgt nun der erneute Reversevorgang, nunmehr das Rückreversieren. Am Ende dieses Vorganges befindet sich das Laufwerk wieder im Vorwärts-Playbetrieb. Die Schnellauftasten 51 und 52 sind ausgefahren.

## Patentansprüche

**1**. Magnetbandkassettengerät mit einem Laufwerk für Magnetbandkassetten, das für Spiel- und Schnellspulbetrieb mit einer ersten und einer gegenläufigen zweiten Bandlaufrichtung ausgelegt ist, wozu außer einem ersten und einem zweiten, von einem Wickelgetriebe (09) wahlweise antreibbaren Wickelteller (12a, 12b) für das Magnetband eine erste und eine zweite in gegenläufigen Drehrichtungen antreibbare Tonwelle (3) vorgesehen sind, wobei der Schnellspulbetrieb mittels Schnellspultasten (51, 52) einleitbar ist und die Umschaltung zwischen den Bandlaufrichtungen mittels Umschaltmitteln (03) erfolgt, zu denen ein Schalthebel (29) für die Umschaltung des Wickelgetriebes (09) gehört, dadurch gekennzeichnet, daß zum Rückwärtsschnellspulen das Wickelgetriebe für die Schnellrücklaufzeit die Wickelteller in Gegenrichtung zur zuvor gehandhabten Richtung schaltet, wobei
- ein schwenkbarer Starthebel (37) der Umschaltmittel (03) im Spiel- oder Schnellspulbetrieb mittels eines ebenfalls schwenkbaren Reversehebels (35) drehgesichert positionierbar ist und zur Einleitung von Reversiervorgängen von dem Reversehebel (35) zum Drehen freigeben kann,
- der Starthebel (37) die Umschaltmittel (03) zum Reversieren für schnelles Rückspulen freigibt, damit diese den Schalthebel (29) von einer Spielrichtung in die andere umschalten,
- das Ausmaß der Schwenkbewegung des Starthebels (37) jedoch während des Einleitens der Umschaltvorgänge begrenzbar ist mittels eines Koppelschiebers (32), bis eine Arretierung der gedrückten Schnellspultaste (51, 52) gesichert ist,
- noch am Ende des Schnellrückwärtsspulens das Wickelgetriebe erneut um- und damit zurückgeschalten, wonach der Koppelschieber (32) die arretierte Schnellauftaste entrastet.

**2**. Magnetbandkassettengerät nach Anspruch 1, dadurch gekennzeichnet, daß der Koppelschieber (32) den Starthebel (29) während des Eindrückvorganges der REV-Schnellspultaste (51) in seiner Bewegungsfreiheit zunächst so begrenzt, daß dieser den REV-Vorgang noch nicht einleiten kann, bis die REV-Schnellspultaste (51) nach weiterem Eindrücken arretiert ist unter Zuhilfenahme einer Arretierklinke (35), und daß danach der Koppelschieber (32) den Starthebel (29) zum Drehen freigibt, damit dieser den REV-Vorgang einleiten kann.

**3**. Magnetbandkassettengerät nach Anspruch 1 oder 2, dadurch gekennzeichnet, daß der Koppelschieber (32) eine Kopplung darstellt zwischen einem Stellhebel und der Arretierklinke (53) für die Schnellauftaste.

**4**. Magnetbandkassettengerät nach einem der Ansprüche 1 bis 3, dadurch gekennzeichnet, daß der Koppelschieber (32) und die Arretierklinke (53) an ihrer Kontaktstelle über eine Feder (54) zusammengehalten werden.

**5**. Magnetbandkassettengerät nach einem der Ansprüche 1 bis 4, dadurch gekennzeichnet, daß der vom Schalthebel (29) verschwenkbare Stellhebel (65) mit einem Entrastansatz (65a) versehen ist, der beim ersten teilweisen Verschwenken des Umschaltmittels (03) nach Erreichen des Bandendes beim Schnellspulen gegen eine Koppelnase (32a) des Koppelschiebers (32) stößt, diesen dadurch verschiebt und dieser dann seinerseits mit seinem Klinkenansatz (32b) gegen einen Entrastansatz der Arretierklinke (53) stößt.

**5**. Magnetbandkassettengerät nach einem der Ansprüche 1 bis 4, dadurch gekennzeichnet, daß der Starthebel (37) eine von Stopwänden (37d) begrenzte Führung aufweist, in die ein Verriegelungsstift (32d) des geradlinig geführten Koppelschiebers (32) mit Spiel einlaufen kann, um dem Starthebel (37) nur Schwenkbewegungen innerhalb der Führung zwischen den Stopwänden (37d) zu gestatten, während die eingedrückte Schnellauftaste (51) noch nicht gerastet ist.

**7**. Magnetbandkassettengerät nach einem der Ansprüche 1 bis 6, dadurch gekennzeichnet, daß der Koppelschieber (32) außer im Falle des Wegführens aus dem Wirkbereich der Klinke (53) mit der schwenkbaren Klinke (53) in Kontakt steht mit Hilfe einer Schenkelfeder (54), die einerseits die Klinke (53) gegen den Klinkenansatz (32b) drückt und andererseits verschiebend auf den Koppelschieber (32) einwirkt, um den Klinkenansatz (32b) gegen die Klinke (53) zu drücken.

**8**. Magnetbandkassettengerät nach einem der Ansprüche 1 bis 7, dadurch gekennzeichnet, daß die Klinke (53) einen Verriegelungszapfen (53d) aufweist, der mit Schnellauftasten (51, 52) derart zusammenwirkt, daß Tastenverriegelungsnocken (51c, 52c) die Klinke (53) beim Eindrücken der Schnellauftasten (51, 52) so verschwenken können, daß die Klinke (53) den Koppelschieber (32) aus dem Zusammenwirken mit dem Starthebel (37) herauszieht und daß beim Einschieben nur einer Schnellauftaste (51 oder 52) diese mit ihrem Tastenverriegelungsnocken (51c oder 52c) hinter dem Verriegelungszapfen (53d) zu ihrer Verriegelung einrasten kann.

**9**. Magnetbandkassettengerät nach einem der Ansprüche 1 bis 87, dadurch gekennzeichnet, daß am Koppelschieber (32) eine Koppelnase (32a) vorgesehen ist, die mit einer Y-förmigen Steuerkontur (37s, 37d) des Starthebels (37) zusammenarbeitet.
